# EUROPÄISCHE PATENTSCHRIFT

(11) **EP 1 410 521 B1**
(45) Veröffentlichungstag und Bekanntmachung des Hinweises auf die Patenterteilung: **31.10.2007**
(21) Anmeldenummer: 01944948.7
(22) Anmeldetag: 18.05.2001
(51) Int. Cl.: H04B 1/707

(54) **VERFAHREN UND ANORDNUNG ZUR MEHRSTUFIGEN PARALLELEN INTERFERENZUNTERDRÜCKUNG IN EINEM CDMA-SYSTEM**
METHOD AND ASSEMBLY FOR THE MULTI-STAGE PARALLEL CANCELLATION OF INTERFERENCE IN A CDMA SYSTEM
PROCEDE ET AGENCEMENT POUR L'ANNULATION DE BROUILLAGE PARALLELE A PLUSIEURS ETAGES DANS UN SYSTEME AMRC

(30) Priorität: 19.05.2000 DE 10026615
(43) Veröffentlichungstag der Anmeldung: 21.04.2004
(73) Patentinhaber: Systemonic AG, 01099 Dresden (DE)
(72) Erfinder: IRMER, Ralf, 01099 Dresden (DE); NAHLER, Achim, 01099 Dresden (DE)
(74) Vertreter: Lippert, Stachow & Partner
(86) Internationale Anmeldenummer: PCT/DE2001/001898
(87) Internationale Veröffentlichungsnummer: WO 2001/089107

(56) Entgegenhaltungen:
- EP-A- 0 849 886
- DIVASALAR D ET AL: "IMPROVED PARALLEL INTERFERENCE CANCELLATION FOR CDMA" IEEE TRANSACTIONS ON COMMUNICATIONS, IEEE INC. NEW YORK, US, Bd. 46, Nr. 2, 1. Februar 1998 (1998-02-01), Seiten 258-268, XP000734697 ISSN: 0090-6778 in der Anmeldung erwähnt

## Beschreibung

Die Erfindung betrifft ein Verfahren zum Empfang von CDMA-Signalen nach dem Oberbegriff des Anspruchs 1. Die Erfindung betrifft weiterhin eine Anordnung nach dem Oberbegriff des Anspruchs 12.

CDMA (Code Division Multiple Access) wird für digitale Mobilfunksysteme eingesetzt. Das ist eine Spreiz-Spektrum-Technik, bei der jedem der 1..k..K Nutzer ein spezifischer Spreizcode zugeordnet wird.
Der sogenannte RAKE-Empfänger, der für Spreizspektrum-Systeme mit einem Nutzer ein geeigneter Empfänger ist, wie in Proakis, J.: "Digital Communications", McGraw-Hill, 3^{rd} ed., 1995 beschrieben, ist für Spreizspektrum CDMA Systeme mit mehreren Nutzern im Falle von Mehrwegeausbreitung und/oder nichtorthogonalen Spreizsequenzen oftmals nicht geeignet, da die Bitfehlerrate durch den Einfluß der Kreuzkorrelationen zwischen den einzelnen Nutzern stark angehoben wird und ein gewisses Qualitätsmaß bezüglich der Bitfehlerrate überschritten werden kann, siehe auch Verdu, S.: "Multiuser Detection", Cambridge University Press, 1^{st} ed., 1998. Die Ursache der drastischen Verschlechterung der Leistungsfähigkeit eines RAKE-Empfängers liegt daran, daß durch diesen Empfängertyp die in diesen Fällen (Mehrwegeausbreitung und/oder nichtorthogonale Spreizsequenzen) auftretenden CDMA-inhärenten Mehrfachzugriffsstörungen (MAI, Multiple Access Interference) nicht berücksichtigt und damit auch nicht unterdrückt werden.
Eine Möglichkeit, diese MAI zu verringern, ist die Parallele Interferenzreduktion (PIC, Parallel Interference Cancellation) oder mehrstufige Interferenzreduktion (Multistage Interference Cancellation). Dieses Verfahren wird unter anderem in Varanasi, M. K.; Aazhang B.: "Multistage Detection in Asynchronous Code-Division Multiple-Access Communications", IEEE Trans. on Commun. (1990, COM38, 509-519), in Divsalar, D. , Simon M. und Raphaeli, D. : "Improved Parallel Interference Cancellation for CDMA", IEEE Trans. on Commun. (1998, COM46(2), 258-268), in Correal, N.., Buehrer, M. und Woerner, B.: "A DSP-Based DS-CDMA Multiuser Receiver Employing Partial Parallel Interference Cancellation", IEEE Journal on Selected Areas in Commun. (1999, 17(4), 613-630) und in US 6 014 373, US 5 644 592 sowie in EP 849886 beschrieben.

Die parallele Interferenzreduktion in mehreren Stufen hat den Nachteil, daß ihre Komplexität näherungsweise linear mit der Anzahl der Stufen wächst. Dadurch steigt der Rechenaufwand und der Implementierungsaufwand, was mit höheren Kosten und höherem Energieverbrauch verbunden sein kann. Deshalb sind Systeme mit mehreren Stufen zwar bekannt, aber wegen ihrer Nachteile werden meist nur wenige Stufen eingesetzt.

Aufgabe der Erfindung ist es, eine Lösung für eine mehrstufige Parallele Interferenzreduktion anzugeben, die eine geringere Komplexität als das Vielfache einer einstufigen Parallelen Interferenzreduktion hat.

Diese Aufgabe wird in Verbindung mit den im Oberbegriff des Anspruchs 1 genannten Merkmalen dadurch gelöst, daß nur dann eine Interferenzneuberechnung erfolgt, wenn sich die Symbolhypothesen zwischen den beiden vorherigen Stufen ändern, oder deren jeweilige Beträge der Differenz einen bestimmten Schwellwert überschreiten. Dadurch kann der Rechenaufwand für eine mehrstufige Parallele Interferenzreduktion drastisch gesenkt werden. Vorteilhafte Varianten zur Auswahl der in eine Interferenzneuberechnung in einer PIC-Stufe einzubeziehenden Symbolhypothesen sind in den Ansprüchen 2 bis 4 angegeben. Verschiedene Varianten der Entspreizung sind in Anspruch 5 dargelegt, während verschiedene CDMA-Systeme im Anspruch 6 dargestellt sind. Verschiedene Symbole sind in Anpruch 7 angegeben, während in Anspruch 8 verschiedene Varianten der Entscheidungsfunktion angegeben werden. Anspruch 9 kennzeichnet die Art der parallelen Interferenzreduktion. Mit den Ansprüche 10 und 11 sind weitere mögliche Varianten beschrieben.
Die Aufgabe wird weiterhin durch eine Anordnung dadurch gelöst, daß der Ausgang der Stufe (i-2) mit dem Ausgang der Stufe (i-1) durch einen Subtrahierer verbunden ist, der Ausgang des Subtrahierers auf den Eingang der Stufe (i) aufgeschaltet ist, und zum Ausgangssignal der Stufe (i) das Ausgangssignal der Stufe (i-1) addiert wird und als Eingangsempfangssignal der Stufe (i) die in Stufe (i-1) gebildete totale Interferenz verwendet wird.

Nachstehend wird die Erfindung anhand von Ausführungsbeispielen und von Zeichnungen näher erläutert. Es zeigen:
- Fig. 1: einen mehrstufigen PIC-Empfänger in Blockdarstellung
- Fig. 2: ein Beispiel einer Stufe eines CDMA-Empfängers mit PIC-Methode
- Fig. 3: eine Berechnung für Symbole, die nur dann in die Interferenzberechnung in Stufe 2 mit einbezogen werden, wenn die Differenz zwischen den jeweiligen Symbolen der vorherigen Stufen ungleich Null ist
- Fig. 4: ein Beispiel eines modifizierten mehrstufigen PIC mit Symboldifferenzen als Eingangsgrößen der Stufen, bei dem die Spreizung und Kanalnachbildung nur aktiviert wird, wenn der Betrag der Symboldifferenz der beiden vorherigen Stufen größer Null oder größer als ein bestimmter Schwellwert ist
- Fig. 5: ein Beispiel einer Anordnung eines modifierten mehrstufigen PICs bei dem die Spreizung und Kanalnachbildung nur aktiviert wird, wenn der Betrag der Symboldifferenz der beiden vorherigen Stufen größer Null oder größer als ein bestimmter Schwellwert ist.

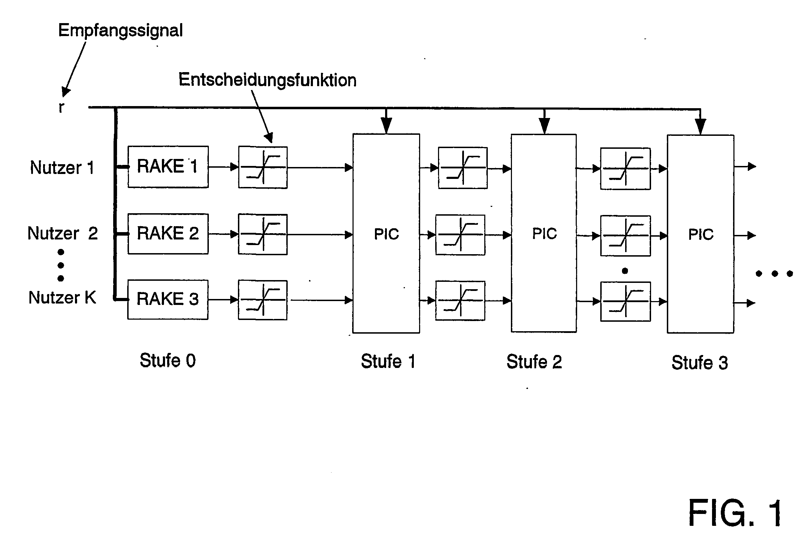

In **Fig. 1** ist ein Ausführungsbeispiel für ein mehrstufiges herkömmliches PIC-Verfahren dargestellt. Die Anzahl der Nutzer K ist hier drei und die Anzahl der auf die Stufe Null folgenden PIC-Stufen ist hier drei.
Die Stufe 0 stellt einen Satz von K Einzelnutzerempfängem dar. In diesen Empfängern wird das Empfangssignal mit einem RAKE-Empfänger für jeden Nutzer 1..k..K detektiert. Der RAKE-Empfänger für einen Nutzer enthält eine Mehrzahl von Korrelatoren (Finger) für die nutzerspezifischen Codes. Die Signale der RAKE-Finger werden mit einer Kombinationsmethode zu einem Symbol zusammengefaßt. Dieses Symbol wird mit einer Entscheidungsfunktion bewertet, so daß die Symbolhypothese für die Stufe 0 entsteht. Diese Symbolhypothese wird im direkten Anschluß an diese Stufe mit einer geeigneten Entscheidungsfunktion bewertet, z.B. dem harten Begrenzer. Diese Symbolhypothese des Symbols n für den Nutzer k nach der Stufe 0 wird mit *d̂ₖ*⁽⁰⁾[*n*] bezeichnet.

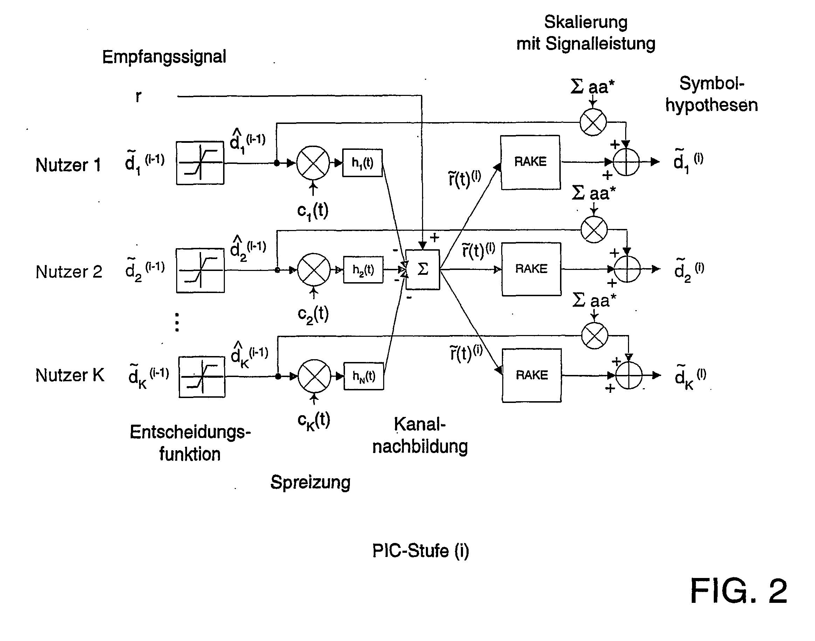

In Fig. 2 ist ein Ausführungsbeispiel für eine herkömmliche Stufe dieses PIC-Algorithmus dargestellt. Die Symbolhypothesen der Nutzer aus dem RAKE-Empfänger der Vorstufe *d̃ₖ*^{(*i*-1)} [*n*] werden mit einer Entscheidungsfunktion bewertet (beispielsweise harter Entscheider) und es ergibt sich die Symbolhypothese *d̂ₖ*^{(*i*-1)} [*n*]. Diese Symbolhypothese wird mit dem nutzerspezifischen komplex- oder reellwertigen Spreizcode *cₖ(t)* gespreizt, der beispielsweise durch eine Spreizcodefolge realisiert werden kann. Anschließend wird dieses Signal mit einer Kanalnachbildung verarbeitet, die durch die Kanalimpulsantwort *hₖ(t)* repräsentiert wird. Alle so nachgebildeten Signale werden vom Empfangssignal subtrahiert, um die sogenannte totale Interferenz *r̃*(*t*)^{(*i*)} zu bestimmen. Diese totale Interferenz wird für jeden Nutzer mit dem nutzerspezifischen Entspreizer (RAKE) entspreizt. Zu diesen entspreizten Signalen wird das jeweilige Eingangssymbol für den entsprechenden Nutzer addiert, das zuvor mit der Leistung des RAKE-Empfängers Σ*aa** multipliziert wurde. Das Ausgangssignal *d̃ₖ* stellt die Symbolhypothese für die folgende PIC-Stufe oder das End-Symbol dar, daß mit einer Entscheidungsfunktion bewertet werden kann.

Gemäß der Erfindung wird das in den **Fig. 1** und **Fig. 2** beschriebene Verfahren der parallelen Interferenzreduktion (PIC) modifiziert und nachfolgend beschrieben:
Die Stufe 0 ist ein konventioneller Einzelnutzer-Korrelationsempfänger (z.B. RAKE), wie **in Fig. 1**. Die Stufe 1 besteht aus einer herkömmlichen Stufe zur parallelen Interferenzreduktion, die z.B. durch ein breitbandiges oder schmalbandige Verfahren nach **Fig. 2** ausgeführt werden kann.
Ab der zweiten PIC-Stufe werden die PIC-Stufen so modifiziert, daß keine Interferenz- oder Symbolberechnungen ausgeführt werden müssen, wenn in einer vorherigen PIC-Stufe schon einmal die gleichen Eingangsdaten angelegen haben.

Da sich diese Symbolhypothesen nur für wenige Symbole ändern, braucht eine Interferenzberechnung nur noch für diese sich ändernden Symbole ausgeführt werden. Dabei werden alle Auswirkungen auf die anderen Symbole berücksichtigt.
Das erfindungsgemäße Verfahren kann in drei Varianten realisiert werden:

### Variante I

Erfolgt die Verarbeitung der Symbole für die verschiedenen Nutzer in zeitlichen Blöcken mit der Blocklänge N_{B}, Symbole, so werden alle Eingangssymbole der Stufe (i-2) und (i-1) für alle Nutzer miteinander verglichen. Sind alle Eingangsymbole beider Stufen miteinander identisch, oder ist die Summe der Differenzen der jeweiligen Eingangssymbole kleiner als eine bestimmte Schranke, so braucht ab der Stufe (i) keine Interferenzberechnung und -reduktion mehr durchgeführt werden, da sich ab der Stufe (i) keine Änderungen für die Symbole mehr ergeben würden. Alle PIC-Stufen ab der Stufe (i), bei der alle Symbole für alle Nutzer die genannte Bedingung erfüllen, können weggelassen werden. Dadurch verringert sich die Rechenkomplexität. Für alle anderen Blöcke muß eine herkömmliche Interferenzberechnung und -reduktion durchgeführt werden, entweder bis zur vorgesehenen maximalen PIC-Stufen Anzahl (*i*ₘₐₓ) oder bis zu derjenigen Stufe, in der die Symbole mit denen der vorherigen Stufe identisch sind.

### Variante II

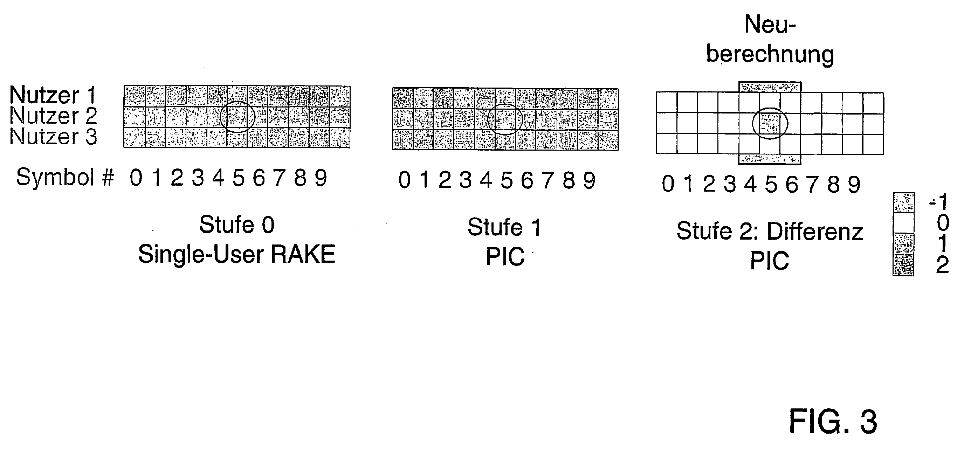

Zur Darstellung dieser Variante dient **Fig. 3**. Die Symbole für die Symbolnummer [n] aller Nutzer K am Ausgang der Stufe (i-1) werden mit denen der Stufe (i-2) verglichen. Sind diese identisch, oder ist deren Differenz kleiner als eine bestimmte Schranke, die die Genauigkeit der Interferenzberechnung bestimmt, wird in der Stufe (i) keine Interferenzberechnung und - reduktion für diese Symbolnummer durchgeführt. Sind diese nicht identisch, müssen in dieser Stufe alle möglichen Auswirkungen auf die vorherigen [n-1,...] und nachfolgenden [n+1,...] Symbole aller Nutzer K berechnet werden. Die Anzahl der zu berücksichtigenden Symbolnummern ergibt sich aus der relevanten Länge der Kanalimpulsantwort. Ist diese beispielsweise kleiner als die Symboldauer, muß die Auswirkung auf das vorherige und das nachfolgende Symbol aller Nutzer berücksichtigt werden. In der **Fig. 3** ist ein Ausführungsbeispiel dafür dargestellt. In einem Mehrnutzersystem mit hier K=3 Nutzern und der Länge der Kanalimpulsantwort kleiner als eine Symboldauer ändert sich von Stufe (i-2) zu Stufe (i) für einen beispielhaften Symbolfolgenausschnitt nur ein Symbol eines Nutzers, hier Symbol 5 des Nutzers 2. Es müssen in der Stufe (i) nur die Interferenzbeiträge dieses Nutzers auf die Symbole Nummer 4,5 und 6 aller anderen Nutzer berechnet werden. Das kann beispielsweise dadurch erfolgen, daß diese Interferenz-Differenz zur in der vorigen Stufe berechneten Interferenz addiert wird.

### Variante III

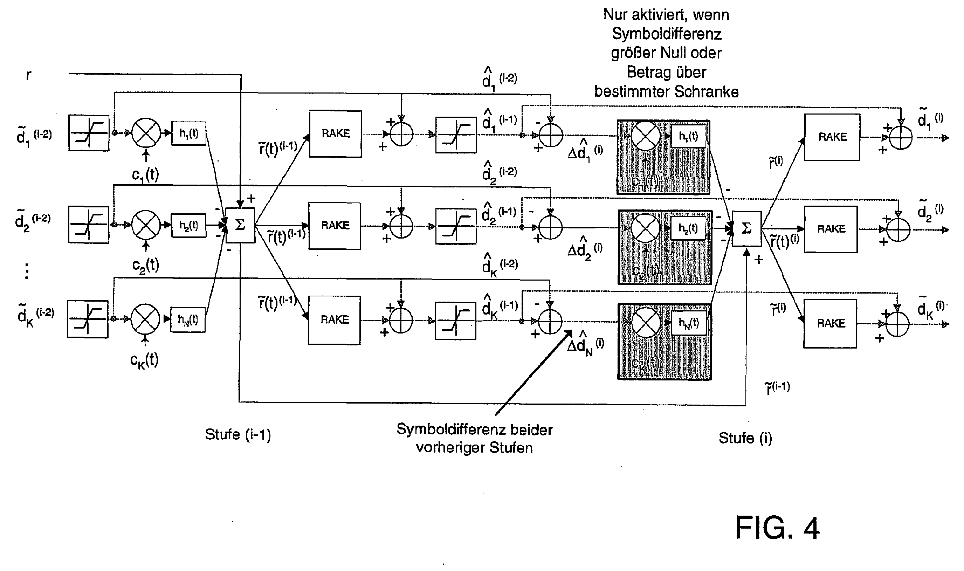

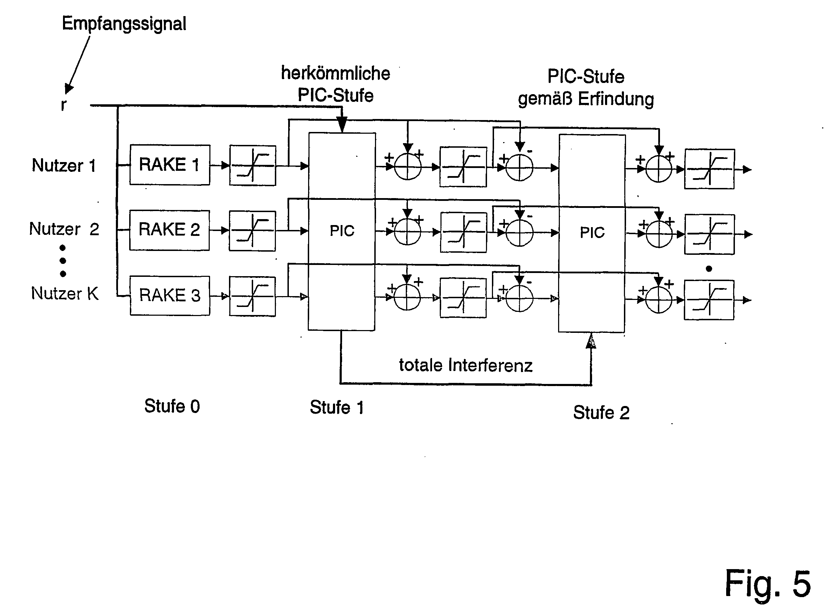

Die Variante III wird anhand von **Fig. 4** und **Fig. 5** erläutert. Der herkömmliche mehrstufige PIC in Fig. 1 und 2. wird wie folgt modifiziert: Ab der Stufe 2 wird anstelle der Symbolhypothese *d̂*^{(*i-*1)}[*n*] nur noch die Differenz Δ*d̂*^{(*i*)}[*n*] =*d̂*^{(*i*-1)}[*n*]- *d̂*^{(*i*-2)}[*n*] zwischen den Symbolhypothesen am Ausgang der beiden vorhergehenden Stufen (i-1) und (i-2) berechnet. Weiterhin wird in der Stufe (i) anstelle des Empfangssignals r das von der Interferenzhypothese *Ĩ*^{(*i*-1)} befreite Empfangssignal *r̃*^{(*i*-1)} [*m*] aus der Stufe (i-1) verwendet. Am Ausgang der Stufe (i) wird die in (i) berechnete Symboldifferenz zur Symbolhypothese aus (i) addiert.
Wenn sich die Symbolhypothese für einen Nutzer k und das Symbol n nicht mehr von PIC-Stufe zu PIC-Stufe nicht ändern, braucht dieses Symbol nicht mehr erneut in die Symbolberechnung mit einbezogen werden. Die Spreizung des Symbols mit einem Spreizer und die Kanalnachbildung brauchen nicht mehr ausgeführt werden, wie es in Fig. 3 schraffiert dargestellt ist. Im Gegensatz dazu wird beim herkömmlichen PIC-Verfahren die Interferenzberechnung in jeder Stufe für alle Symbole aller Nutzer durchgeführt.
Der Anteil η der Symbole, für die sich die Hypothesen von Stufe (i-2) bis (i-1) ändern, liegt in der Größenordung der Bitfehlerrate. Da die Bitfehlerrate von Stufe zu Stufe abnimmt, ist für die höheren Stufen (i) eine immer geringere Anzahl von erneuten Interferenzberechnungen möglich. Damit sinkt die Komplexität tendenziell von Stufe zu Stufe, da Spreizung und Kanalnachbildung einen erheblichen Beitrag zur Komplexität liefern.

## Patentansprüche

1. Verfahren zum Empfang von CDMA-Signalen von mehreren Nutzern, bei dem auftretende Mehrnutzerinterferenzen durch parallele Interferenzreduktion in mehreren Stufen oder mehrstufige Interferenzreduktion reduziert wird, indem in einer nullten Stufe Einzelnutzerdetektoren verwendet werden, deren Ausgangsgrößen Symbolhypothesen der nullten Stufe sind, die mit einer Entscheidungsfunktion bewertet werden können, und in der folgenden ersten Stufe eine parallele Interferenzreduktion erfolgt, deren Ausgangsgrößen Symbolhypothesen der ersten Stufe sind, die mit einer Entscheidungsfunktion bewertet werden können, **dadurch gekennzeichnet, daß** in den der ersten Stufe folgenden Stufen nur dann eine Interferenzneuberechnung erfolgt, wenn sich die Symbolhypothesen zwischen den beiden vorherigen Stufen ändert oder deren jeweilige Beträge der Differenz einen bestimmten Schwellwert überschreiten.

2. Verfahren nach Anspruch 1, **dadurch gekennzeichnet, daß** die Verarbeitung der Symbole in Blöcken erfolgt und wenn alle Symbole aller Nutzer eines Blockes zwischen zwei aufeinanderfolgenden PIC-Stufen oder wenn die Zusammenfassung der Beträge der Differenzen der jeweiligen Symbole dieser Stufen einen bestimmten Schwellwert unterschreitet, in den folgenden Stufen keine Interferenzberechnung- und Reduktion durchgeführt wird, jedoch für die anderen Blöcke Interferenzberechnung- und Reduktion in der folgenden Stufe durchgeführt wird.

3. Verfahren nach Anspruch 1 oder 2, **dadurch gekennzeichnet, daß** zwischen den Symbolhypothesen aller Nutzer zweier aufeinanderfolgender PIC-Stufen (i-2) und (i-1) die Symboldifferenz berechnet wird und in der Stufe (i) die Interferenz und Symbolhypothese direkt aus der vorherigen Stufe (i-1) ohne Neuberechnung übernommen wird und dazu die aus der Symboldifferenz berechnete Interferenz mit relevanter Wirkung auf die anderen Nutzersymbole addiert wird, jedoch nur für diejenigen Symboldifferenzen, die nicht Null sind oder deren Beträge eine bestimmte Schranke überschreiten.

4. Verfahren nach einem oder mehreren der Ansprüche 1 bis 3, **dadurch gekennzeichnet, daß** zwischen den Symbolhypothesen aller Nutzer zweier aufeinanderfolgender PIC-Stufen (i-2) und (i-1) die Symboldifferenz berechnet wird und in der Stufe (i) nur dann eine Spreizung und Kanalnachbildung stattfindet, wenn diese Symboldifferenz eines Nutzers ungleich Null ist oder deren Beträge eine bestimmte Schranke überschreiten und für die sonstigen Symbole keine Berechnungen durchgeführt werden, sondern das Ausgangssignal der Spreizung und Kanalnachbildung zu Null gesetzt wird, und zu den derartig aus den Symboldifferenzen bestimmten Interferenzbeiträgen das in der vorherigen PIC-Stufe berechnete Interferenzsignal addiert wird.

5. Verfahren nach einem oder mehreren der Ansprüche 1 bis 4, **dadurch gekennzeichnet, daß** die Entspreizung des CDMA-Signals durch einen Multiplikationsentspreizer oder RAKE-Empfänger erfolgt.

6. Verfahren nach einem oder mehreren der Ansprüche 1 bis 5., **dadurch gekennzeichnet, daß** als CDMA-System ein Direkt-Sequenz-CDMA System oder ein Multi-Carrier-CDMA-System verwendet wird.

7. Verfahren nach einem oder mehreren der Ansprüche 1 bis 6, **dadurch gekennzeichnet, daß** die Symbole zweiwertig oder mehrwertig reell oder komplex sind.

8. Verfahren nach einem oder mehreren der Ansprüche 1 bis 7, **dadurch gekennzeichnet, daß** die Entscheidungsfunktion eine lineare, hart entscheidende, tangens hyperpolicus oder sonstige nichtlineare Funktion ist.

9. Verfahren nach einem oder mehreren der Ansprüche 1 bis 8, **dadurch gekennzeichnet, daß** in einer PIC-Stufe volle oder partielle Interferenzreduktion durchgeführt wird.

10. Verfahren r nach einem oder mehreren der Ansprüche 1 bis 9, **dadurch gekennzeichnet, daß** eine PIC-Stufe durch einen Breitband- oder Schmalband-PIC ausgeführt wird.

11. Verfahren nach einem oder mehreren der Ansprüche 1 bis 10, **dadurch gekennzeichnet, daß** die Signalverarbeitung mit digitalen Signalprozessoren oder Mikroprozessoren oder mit einem systemspezifischen Schaltkreis erfolgt.

12. Anordnung zur Durchführung des Verfahrens nach Anspruch 1 bis 4, **dadurch gekennzeichnet, daß** der Ausgang einer ersten Stufe (i-2) mit dem Ausgang einer der ersten Stufe nachgeschalteten zweiten Stufe (i-1) durch einen Subtrahierer verbunden ist, der Ausgang des Subtrahierers auf den Eingang einer der zweiten Stufe nachgeschalteten dritten Stufe (i) aufgeschaltet ist, und zum Ausgangssignal der dritten Stufe (i) das Ausgangssignal der zweiten Stufe (i-1) addiert wird und als Eingangsempfangssignal der dritten Stufe (i) die in der zweiten Stufe (i-1) gebildete totale Interferenz verwendet wird.

## Claims

1. Method for receiving CDMA signals from a plurality of users, according to which the multi-user interference which occurs is reduced by parallel interference cancellation in a plurality of stages or by multi-stage interference cancellation, wherein single user detectors are used in a zero stage, whose initial variables represent symbol hypotheses of the zero stage, which can be evaluated using a decision function, and in the subsequent first stage a parallel interference cancellation takes place, whose initial values represent symbol hypotheses of the first stage, which can be evaluated using a decision function, **characterized in that** in the subsequent stages following the first stage, the interference is only re-calculated if the symbol hypotheses between the two previous stages change, or the respective values of the difference exceed a certain threshold.

2. Method according to Claim 1, **characterized in that** the processing of the symbols takes place in blocks and if all symbols of all users of a block between two successive PIC stages or if the sum of the values of the differences of the individual symbols of these stages fall short of a certain threshold, no interference calculation and cancellation are performed in the subsequent stages, however interference calculation and cancellation are performed in the subsequent stage for the other blocks.

3. Method according to Claim 1 or 2, **characterized in that** the symbol difference is calculated between the symbol hypotheses of all users of two successive PIC stages (i-2) and (i-1) and in the stage (i) the interference and symbol hypothesis is directly taken over from the previous stage (i-1) without re-calculation and for this purpose the interference calculated from the symbol difference is added with relevant effect to the other user symbols, however only for those symbol differences, which are not zero or whose values exceed a certain barrier.

4. Method according to one or more of Claims 1 to 3, **characterized in that** the symbol difference is calculated between the symbol hypotheses of all users of two successive PIC stages (i-2) and (i-1) and in the stage (i) only spread and channel synthesization takes place, if this symbol difference of a user is not equal to zero or its values exceed a certain barrier and no calculations are performed for the other symbols, but the output signal of the spread and channel synthesization is set to zero, and the interference signal calculated in the previous PIC stage is added to the interference values determined in this way from the symbol differences.

5. Method according to one or more of Claims 1 to 4, **characterized in that** the despreading of the CDMA signal takes place by a multiplication despreader or RAKE receiver.

6. Method according to one or more of Claims 1 to 5, **characterized in that** a direct sequence CDMA system or a multi carrier CDMA system is used as the CDMA system.

7. Method according to one or more of Claims 1 to 6, **characterized in that** the symbols are real or complex bi-values or multi-values.

8. Method according to one or more of Claims 1 to 7, **characterized in that** the decision function is a linear, hard deciding, tangens hyperpolicus or other non-linear function.

9. Method according to one or more of Claims 1 to 8, **characterized in that** full or partial interference cancellation is performed in a PIC stage.

10. Method according to one or more of Claims 1 to 9, **characterized in that** a PIC stage is implemented by a broadband or narrow band PIC.

11. Method according to one or more of Claims 1 to 10, **characterized in that** the signal processing takes place with digital signal processors or microprocessors or with a system-specific switching circuit.

12. Arrangement for executing the method according to Claims 1 to 4, **characterized in that** the output of a first stage (i-2) is connected by a subtracter to the output of a second stage (i-1) downstream from the first stage, the output of the subtracter is upstream to the input of a third stage (i) downstream from the second stage, and the output signal of the second stage (i-1) is added to the output signal of the third stage (i) and the total interference formed in the second stage (i-1) is used as the initially received signal of the third stage (i).

## Revendications

1. Procédé de réception de signaux AMRC provenant de plusieurs utilisateurs, selon lequel les interférences utilisateurs multiples qui apparaissent sont réduites par une réduction parallèle des interférences dans plusieurs étages ou par une réduction multi-étages des interférences, en utilisant dans un étage zéro des détecteurs d'utilisateur individuel dont les grandeurs de sortie sont des hypothèses de symboles de l'étage zéro qui peuvent être évaluées à l'aide d'une fonction de décision, et dans le premier étage suivant, il se produit une réduction parallèle des interférences dont les grandeurs de sortie sont des hypothèses de symboles du premier étage qui peuvent être évaluées à l'aide d'une fonction de décision,
**caractérisé en ce que**
dans les étages suivant le premier étage, un nouveau calcul des interférences n'est effectué que lorsque les hypothèses de symboles entre les deux étages précédents varient ou que les valeurs respectives de la différence dépassent une valeur de seuil donnée.

2. Procédé selon la revendication 1,
**caractérisé en ce que**
le traitement des symboles s'effectue dans des blocs et lorsque tous les symboles de tous les utilisateurs d'un bloc entre deux étages PIC (réduction parallèle d'interférences) successifs ou lorsque le résumé des valeurs des différences entre les symboles respectifs de ces étages sont inférieurs à une valeur de seuil donnée, aucun calcul ni aucune réduction d'interférence ne se produit dans les étages suivants, bien qu'un calcul et une réduction d'interférence soient effectués dans l'étage suivant pour les autres blocs.

3. Procédé selon la revendication 1 ou 2,
**caractérisé en ce qu'**
entre les hypothèses de symboles de tous les utilisateurs de deux étages PIC successifs (i-2) et (i-1), on calcule la différence de symbole et dans l'étage i, on reprend l'interférence et l'hypothèse de symbole directement de l'étage précédent (i-1) sans nouveau calcul et on y ajoute l'interférence calculée à partir de la différence de symbole avec une action pertinente sur les autres symboles utilisateurs, toutefois uniquement pour les différences de symboles différentes de zéro ou dont les valeurs dépassent une barrière donnée.

4. Procédé selon l'une ou plusieurs des revendications 1 à 3,
**caractérisé en ce qu'**
entre les hypothèses de symboles de tous les utilisateurs de deux étages PIC successifs (i-2) et (i-1), on calcule la différence de symboles, et dans l'étage (i) on effectue un étalement et une émulation de canal seulement lorsque cette différence de symboles d'un utilisateur est différente de zéro ou que ses valeurs dépassent une barrière donnée et aucun calcul n'est effectué pour les autres symboles, mais le signal de sortie de l'étalement et de l'émulation de canal est mis à zéro, et l'on ajoute aux valeurs d'interférence déterminées de cette manière à partir des différences de symboles le signal d'interférence calculé dans l'étage PIC précédent.

5. Procédé selon l'une ou plusieurs des revendications 1 à 4,
**caractérisé en ce que**
le désétalement du signal AMRC s'effectue par un désétaleur par multiplication ou par un récepteur RAKE.

6. Procédé selon l'une ou plusieurs des revendications 1 à 5,
**caractérisé en ce que**
l'on utilise en tant que système AMRC un système AMRC à séquence directe ou un système AMRC à ondes porteuses multiples.

7. Procédé selon l'une ou plusieurs des revendications 1 à 6,
**caractérisé en ce que**
les symboles sont réels ou complexes à deux ou plusieurs valeurs.

8. Procédé selon l'une ou plusieurs des revendications 1 à 7,
**caractérisé en ce que**
la fonction de décision est une fonction linéaire à décision dure tangente hyperbolique ou une autre fonction non linéaire.

9. Procédé selon l'une ou plusieurs des revendications 1 à 8,
**caractérisé en ce que**
dans un étage PIC, on réalise une réduction d'interférences complète ou partielle.

10. Procédé selon l'une ou plusieurs des revendications 1 à 9,
**caractérisé en ce qu'**
un étage PIC est réalisé à large bande ou à bande étroite.

11. Procédé selon l'une ou plusieurs des revendications 1 à 10,
**caractérisé en ce que**
le traitement de signaux s'effectue à l'aide de processeurs de signaux numériques ou de microprocesseurs ou à l'aide d'un circuit de commutation spécifique au système.

12. Dispositif destiné à mettre en oeuvre le procédé selon les revendications 1 à 4,
**caractérisé en ce que**
la sortie d'un premier étage (i-2) est reliée à la sortie d'un deuxième étage (i-1) disposé en aval du premier étage par un organe de soustraction, la sortie de l'organe de soustraction est connectée sur l'entrée d'un troisième étage (i) disposé en aval du deuxième étage, et l'on ajoute au signal de sortie du troisième étage (i) le signal de sortie du deuxième étage (i-1) en utilisant comme signal de réception d'entrée du troisième étage (i) l'interférence totale formée dans le deuxième étage (i-1).
